# EUROPEAN PATENT SPECIFICATION

(11) **EP 3 169 091 B1**
(45) Date of publication and mention of the grant of the patent: **01.05.2019**
(21) Application number: 16178715.5
(22) Date of filing: 08.07.2016
(51) Int. Cl.: H04W 4/90

(54) **CONTROL METHOD OF EMERGENCY CALL AND USER EQUIPMENT USING THE SAME**
STEUERUNGSVERFAHREN FÜR NOTRUFE UND BENUTZERGERÄT DAFÜR
PROCÉDÉ DE COMMANDE D'APPEL D'URGENCE ET ÉQUIPEMENT UTILISATEUR L'UTILISANT

(30) Priority: 12.11.2015 TW 104137320
(43) Date of publication of application: 17.05.2017
(73) Proprietor: Acer Incorporated, New Taipei City 221 (TW)
(72) Inventor: LIN, Mei-Yi, New Taipei City 221 (TW)
(74) Representative: Haseltine Lake LLP

(56) References cited:
- WO-A1-2014/014583
- US-A1- 2005 070 291
- US-A1- 2013 090 081

## Description

### TECHNICAL FIELD

The disclosure is related to a mobile communication technique, and more particularly, to a control method of emergency call and user equipment using the same.

### BACKGROUND

Along with rapid development of mobile communication technique, people can use user equipments (UEs) (e.g., smart phones, notebook computers, tablet computers, etc.) to make phone calls, send messages or access the Internet at anytime and anywhere, or can even access video and audio streaming services (for example, to listen to music or watch movies, etc) requiring a high transmission bandwidth or high transmission speed.

On the other hand, emergency call service is a sort of emergency service which is available in mobile communication technique for people calling police, fire station or hospital in an emergency distress. In some conditions, even without having to insert a Universal Integrated Circuit Card (UICC) (e.g., Subscriber Identity Module (SIM) card, Universal Subscriber Identity Module (USIM) card, etc.), or without having to unlock the locked state of the user equipment, people can still seek help or rescue through directly dialing the direct dial numbers (e.g., 112, 999, etc.).

Generally, when the UE camps on a suitable cell and obtains a normal service, then an emergency call can be initiated. However, in some circumstances, the signal strength or the signal quality received from a serving cell of the current Public Land Mobile Network (PLMN) may be poor, thus the UE cannot successfully establish a connection. Then, the UE might continue to select this serving cell, such that the call failure may continue to occur.

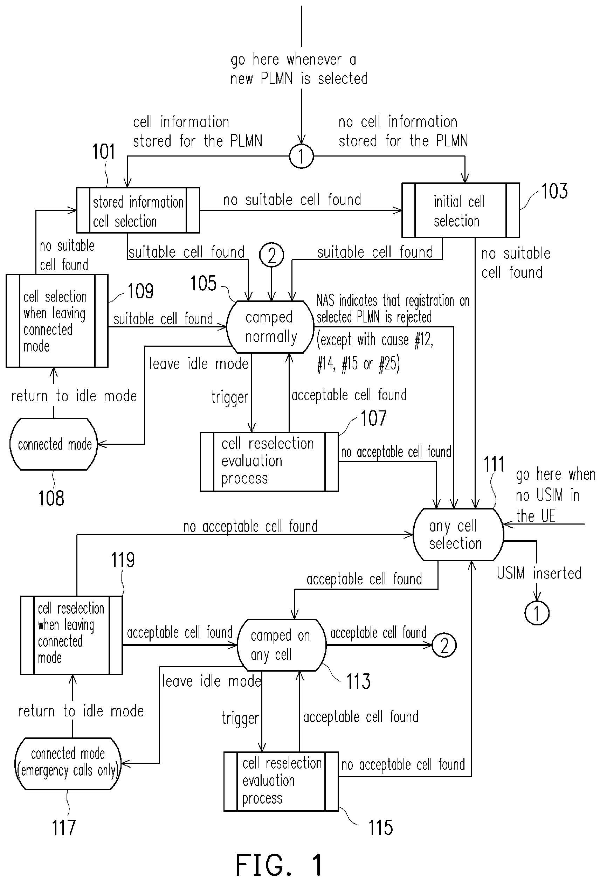

Specifically, FIG. 1 is a flowchart illustrating a state of a cell selection and reselection procedure of a UE in an idle mode (identical to specification TS 25.304 in the Third Generation Partnership Project 3G (3GPP)). Referring to FIG. 1, whenever a PLMN has been selected by Non-Access Stratum (NAS), the UE shall attempt to find a suitable cell to camp on. If the UE already has a cell information stored for the selected PLMN, then the UE will perform the stored information cell selection procedure (State 101). If the UE has no cell information stored for the selected PLMN, then the UE will execute the initial cell selection procedure (State 103).

Next, if a suitable cell is found in the cell selection procedures executed in States 101 and 103, the UE enters in state Camped normally (State 105) and camps on this suitable cell. In State 105, the UE obtains a normal service (e.g., answering an incoming call or initiating a call, etc.). The UE enters Connected mode (State 108) in order to make a call, and the UE enters Cell selection procedure (State 109) when leaving the state Connected mode. In addition, in order to select a better suitable cell, the UE enters Cell reselection procedure (State 107).

On the other hand, if no suitable cell is found or if a necessary NAS registration on selected PLMN is rejected (except with cause #12: location area not allowed; #14: General Packet Radio Service (GPRS) not allowed in this PLMN; #15: no suitable cell existing in location area or #25: Closed Subscriber Group (CSG) unauthorized), then the UE enters Any cell selection (State 111), and shall attempt to camp on an acceptable cell of any PLMN.

If an acceptable cell is found in the any cell selection procedure executed in State 111, then the UE enters Camped on any cell (State 113), and camps on the acceptable cell. The UE may initiate an emergency call so as to enter Connected mode (State 117). UE will enter Cell selection procedure (State 119) after leaving Connected mode. In addition, in order to select a better acceptable cell, the UE may enter the state Cell reselection procedure (State 115). In addition, in State 113, the UE may also continue to attempt to find a suitable cell, and return to State 105 after a suitable cell is found.

It should be noted that, a suitable cell indicates that this cell fulfils the requirements of belonging to the selected PLMN, not being barred, cell selection criteria, and so on, and the UE camping on the suitable cell would obtain a normal service. An acceptable cell indicates that this cell fulfils the minimum set of requirements to initiate an emergency call, receive Earthquake Tsunami Warning System (ETWS) notification, receive Commercial Mobile Alert System (CMAS) notification, and so on, and the UE camps on the acceptable cell and may merely obtain a restricted service (e.g., initiating an emergency call, receiving ETWS or CMAS notifications).

Assuming that the UE initiates an emergency call in State 105, it shall attempt to access the current serving cell so as to enter Connected mode (State 108). If attempting to access the serving cell is failed, then the UE may enter Cell reselection evaluation procedure (State 107). Assuming that a poor signal strength and signal quality causes the emergency call before entering State 108 failed (e.g., Radio Resource Control (RRC) connection establishing failed, and the like), since not under the RRC connected mode, the UE might not attempt to enter RRC to re-establish, thus the UE may return to RRC idle mode and performs cell reselection procedure. However, the serving cell may be selected again, and the emergency call triggered by the upper layer may also be failed again. In this circumstance, the UE may remain on this serving cell with poor signal strength or signal quality, and to attempt to originate an emergency call may continue to be failed.

Some background information can be found in WO 2014/014583 and US 2005/070291.

### BRIEF SUMMARY

The disclosure provides a control method of emergency call and user equipment using the same, capable of effectively avoiding the abovementioned problem that attempting an emergency call is continued to fail.

The disclosure provides a control method of emergency call, adapted to a user equipment (UE). The control method includes the following steps. In a first Public Land Mobile Network (PLMN), an emergency call is originated. Whether a radio resource related failure indication is received is determined. In response to the failure indication being received, one of second PLMNs supported by the user equipment is selected, and the emergency call is originated again.

The disclosure provides a UE, and the user equipment includes a transceiver module, a storage unit and a processing unit. The transceiver module transmits and receives wireless signals. The storage unit records modules. The processing unit couples the transceiver module and the storage unit, and accesses and executes the modules recorded by the storage unit. The modules include a radio resource control module and a call control module. In a first PLMN, the call control module originates an emergency call, and determines whether a failure indication from the radio resource control module is received or not. In response to the failure indication being received, the call control module selects one of second PLMNs supported by the user equipment, and originates the emergency call again.

In light of the above, the control method of emergency call and user equipment using the same of the disclosure determines whether the radio resource control module responds to the failure indication in the originating emergency call procedure, so as to reselect any supportable cell of PLMN, and originates the emergency call again. As such, the user equipment can automatically, effectively and successfully establish an emergency call, and the user being unable to send out a distress message through emergency call may effectively be avoided.

To make the above features and advantages of the disclosure more comprehensible, several embodiments accompanied with drawings are described in detail as follows.

### BRIEF DESCRIPTION OF THE SEVERAL VIEWS OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a flowchart illustrating a state of a cell selection and reselection procedure of a UE in an idle mode.
FIG. 2 is a schematic view illustrating a communication system according to an exemplary embodiment of the disclosure.
FIG. 3 is a block diagram illustrating a user equipment according to an exemplary embodiment of the disclosure.
FIG. 4 is a flow chart illustrating a control method an emergency call according to an exemplary embodiment of the disclosure.
FIG. 5 shows an embodiment that a user equipment establishes an emergency call.

### DETAILED DESCRIPTION

In some circumstances, although a call cannot be successfully established on a current serving cell, cells of other public land mobile networks (PLMNs) adjacent to the user equipment may have a better signal strength and signal quality. In the present embodiment of the disclosure, in the procedure of originating an emergency call on the current serving cell, according to whether a failure indication (e.g., a lower layer failure indication) related to the radio resource is received or not, an acceptable cell is reselected in any one of the PLMNs supported by the user equipment. Then, after the acceptable cell is camped on, the user equipment originates the emergency call again. Therefore, in the present embodiment, a probability of successfully establishing an emergency call would be elevated. Reference will now be made to the present preferred embodiments of the disclosure, and it will be apparent to those skilled in the art that adjustments and applications can be correspondingly made to the following embodiments based on demands instead of being limited by the content in the following description.

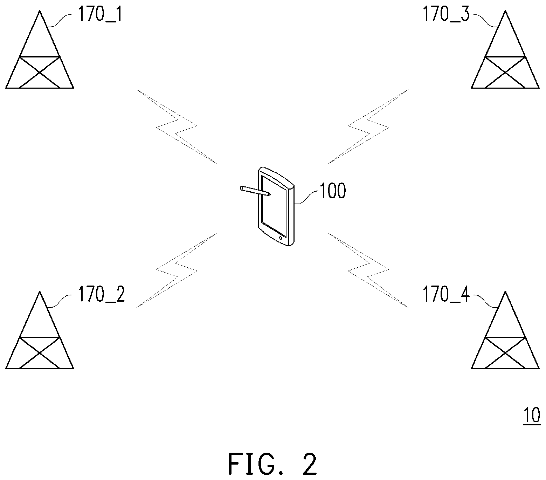

FIG. 2 is a schematic view illustrating a communication system according to an exemplary embodiment of the disclosure. Referring to FIG. 2, the communication system 10 includes a user equipment (UE) 100 and a plurality of base stations 170_1 through 170_4 (four base stations 170_1, 170_2, 170_3 and 170_4 are shown as an example in FIG. 2, but it is not limited thereto).

The term "user equipment" (UE) (such as UE 100) in this disclosure could represent various embodiments which for example could include but not limited to a mobile station, an advanced mobile station (AMS), a server, a client, a desktop computer, a laptop computer, a network computer, a workstation, a personal digital assistant (PDA), a tablet personal computer (PC), a scanner, a telephone device, a pager, a camera, a television, a hand-held video game device, a musical device, a wireless sensor, and so like.

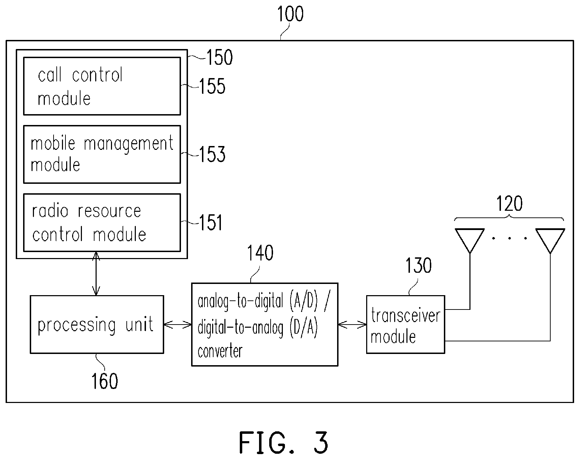

FIG. 3 is a block diagram illustrating the UE 100 according to an exemplary embodiment of the disclosure, and the UE 100 may be represented by at least the functional elements as illustrated in FIG. 3 in accordance with an embodiment of the present disclosure. The UE 100 may contain at least (but not limited to) one or more antenna units 120, a transceiver module 130, an analog-to-digital (A/D) / digital-to-analog (D/A) converter 140, a storage unit 150 and a processing unit 160. The transceiver module 130 transmits downlink signals and receives uplink signals wirelessly via the antenna units 120. The transceiver module 130 may also perform operations such as low noise amplifying, impedance matching, frequency mixing, up or down frequency conversion, filtering, amplifying, and so like. The (A/D) / (D/A) converter 140 is configured to convert from an analog signal format to a digital signal format during uplink signal processing and from a digital signal format to an analog signal format during downlink signal processing.

The storage unit 150 may be any type of fixed or movable random access memory (RAM), a read-only memory (ROM), a flash memory or other similar devices or a combination of the above devices. In the embodiment, the storage unit 150 is adapted to store programming codes, device configurations, a codebook, buffered or permanent data, and adapted to record software programs including radio resource control (RRC) module 151, mobility management (MM) module 153, call control (CC) module 155, and so forth. In the present embodiment, the storage unit 150 is not limited to be one single memory device, and the abovementioned software modules may also be stored separately in two or more of memory devices of the same or different types.

The RRC module 151 is adapted to perform the functions such as broadcasting information related to NAS and AS, establishment, maintenance and release of RRC connection between the UE and the radio access network (RAN), assignment, reconfiguration and release of radio resources for RRC connection, initial cell selection and cell reselection procedures, and corresponds to the RRC sub-layer in communication protocol stack. The MM module 153 is adapted to support the mobility (e.g., report the network of the current location, provide user identification confidentiality) of UE 100, and adapted to provide connection management service to the Connection Management (CM) layer, and corresponds to the MM sub-layer in communication protocol stack. The CC module 155 is adapted for performing call procedures related to CC communication protocol such as call origination, call termination, and the like, and corresponds to the CM control sub-layer in communication protocol stack.

The processing unit 160 is configured for processing digital signals and performing a control method of an emergency call in accordance with the exemplary embodiments of the disclosure. In addition, the processing unit 160 may be coupled to the storage unit 150, so as to access and load the modules (e.g., RRC module 151, MM module 153, CC module 155, etc.) recoded by the storage unit 150. The functions of the processing unit 160 could be implemented by using programmable units such as a micro-processor, a micro-controller, a digital signal processing (DSP) chips, a field programmable gate array (FPGA), etc. The functions of the processing unit 160 may also be implemented with separate electronic devices or integrated circuits (ICs), and the processing unit 160 may also implement either hardware or software.

The term "base station" (such as the base stations 170_1-170_4) in this disclosure could represent various embodiments which for example could include (but not limited to) a Home Evolved Node B (HeNB), an eNB, an advanced base station (ABS), a base transceiver system (BTS), an access point, a home base station, a relay station, a scatterer, a repeater, an intermediate node, an intermediary, and/or satellite-based communications base stations. In the embodiment, each of the base stations 170_1-170_4 may support the same or different radio access technology (RAT) (e.g., the second generation (2G), the third generation (3G) or the fourth generation (4G) mobile communication technology or other voice call acceptable communication technology), or may belong to different PLMNs.

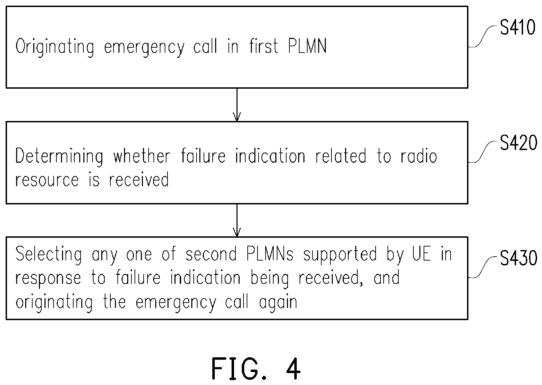

In order to facilitate understanding of an operation flow of the disclosure, a plurality of embodiments is provided below to describe a control method of the UE 100 performing an emergency call of the disclosure in detail. FIG. 4 is a flow chart illustrating a control method an emergency call according to an exemplary embodiment of the disclosure. Referring to FIG. 4, the control method is adapted for the UE 100 of FIG. 3. In the following description, the control method of the present embodiment is described with reference of various components and modules of the UE 100. The flow of the control method can be adjusted according to actual requirements, and is not limited to the following implementation.

In step S410, the processing unit 160 originates an emergency call through the CC module 155 in a first public land mobile network (PLMN). Assuming in a circumstance, the UE 100 is inserted an USIM card which supports the first PLMN, and camps on a cell (for the sake of convenience of illustration, hereinafter "serving cell") of the base station 170_1 of FIG. 2 which belongs to the first PLMN, and receives the service provided by the serving cell. And the base stations 170_2-170_4 do not belong to the first PLMN. The UE 100 receives a dial operation done by the user via the input module (e.g., touch screen, keyboard, mouse, etc.). If the processing unit 160 determines that the dial operation is an input of direct dialing numbers (e.g., 112, 999, etc.) of an emergency call, then originates an emergency call via the CC module 155 (State 105 in FIG. 1). The RRC module 151 may receive the request from the upper layer (i.e., the CC module 155), and attempts to obtain the radio resources (e.g., transmitting access request through the random-access channel (RACH)) with the serving cell, so as to enter connected mode (e.g., State 108 in FIG. 1) to perform a call.

In the step S420, the processing unit 160 determines whether a failure indication related to the radio resources from the RRC module 151 is received or not through the CC module 155. In the present embodiment, the failure indication is a lower layer failure indication of the CC module 155. The lower layer failure indication may refer to a logical link failure, a radio resource sub-layer failure, from RRC sub-layer to GPRS Mobility Management (GMM) sub-layer failure, or the like. For example, the RACH failure. Generally, the error of the failure indication cannot be corrected by the lower layer (e.g., the RRC module 151, the radio link control (RLC) module, etc.). In the embodiment, the circumstance that a failure indication is received is deemed as signal strength and signal quality transmitted by the serving cell is poor, and may cause the attempt of the call failed. In response to the failure indication being not received, the UE 100 then may successfully establish an emergency call, and enter the connected mode (State 108 in FIG. 1).

On the other hand, in the step S430, in response to the failure indication being received, the call control module 155 selects one of the second PLMNs supported by the UE 100, and originates the emergency call again. In one embodiment, the RRC module 151 initiates finding an acceptable cell of any one of the second PLMNs, so as to perform a camping procedure, and the CC module 155 originates the emergency call again on the acceptable cell that has completed the camping procedure.

Specifically, referring to FIG. 1, to let the UE 100 camp on the cell belonging to other PLMNs, it is necessary to enter the any cell selection state 111 first. Accordingly, in the present embodiment, in response to the failure indication being received, the processing unit 160 initiates finding an acceptable cell of any one of the second PLMNs (e.g., State 111 in FIG. 1) through the RRC module 151, so as to perform a camping procedure, and the CC module 155 originates the emergency call again on the acceptable cell (e.g., State 113 in FIG. 1) that has completed the camping procedure, so as to enter the connected mode of State 117 in FIG. 1.

If an acceptable cell is found (e.g., the base station 170_3 in FIG. 2), then the service indication may be transmitted to the upper layer (e.g., the CC module 155, the radio interface layer application program interface (RIL API), etc.), so as to declare that now it is available for the re-establishment of the emergency call. And the UE 100 may attempt to originate the emergency call from the upper layer on the acceptable cell again via the CC module 155 or other software programs. Namely, the processing unit 160 automatically originates the emergency call again through the CC module 155 or other software programs, under the condition that the user does not re-operate the dial operation.

In addition, in response to the failure indication being received, the RRC module 151 disables the cell reselection procedure in the first PLMN. In other words, the user may omit the normal cell reselection procedure (e.g., State 107 in FIG. 1), and directly enters the any cell selection procedure (e.g., State 111 in FIG. 1), so as to avoid the same serving cell being selected again.

On the other hand, in response to the failure indication being received, if the acceptable cell is not found, the CC module 155 does not attempt to originate the emergency call. In one embodiment, the RRC module 151 initiates finding a suitable cell, so as to perform the camping procedure, and in response to the suitable cell not being found, performs a stored information cell selection procedure so as to find the suitable cell. Specifically, in the any cell selection procedure (e.g., State 111 in FIG. 1), the processing unit 160 may find an acceptable cell first, and when the acceptable cell is not found, then continues to find a suitable cell. And the candidate cells for selection of the suitable cell are the cell(s) used immediately before leaving the connected state (e.g., State 108 in FIG. 1).

Next, if the suitable cell is still not found, then the processing unit 160 may use the stored information cell selection procedure so as to find the suitable cell. In this circumstance, the processing unit 160 might not attempt to originate the emergency call again through the CC module 155. For instance, the processing unit 160 may, for example, transmit an error message to the upper layer (e.g., the application program, a driver, etc.), and interrupts the emergency call.

In addition, if the UE 100 is able to originate the emergency call again and successfully enter the connected mode (e.g., State 117 in FIG. 1), in order to avoid the UE 100 camping on the acceptable cell again and a restricted service may merely be obtained, in one embodiment, in response to the emergency call being ended, the RRC module 151 initiates perform a cell reselection procedure in the first PLMN, and disables finding the acceptable cell of any one of the second PLMNs.

Specifically, after the call is ended in any PLMN (e.g., the UE 100 receiving a hang-up operation, or the connection being hang-up by the other, etc.), the UE 100 may return to the idle mode and selects the suitable cell to enter the camping procedure. For example, the UE 100 changes from State 117 to State 109 in FIG. 1. The UE 100 may, for example, first change to the first PLMN used in the step S410. And the candidate cells for this selection are the cell(s) used immediately before leaving the connected state (e.g., State 108 in FIG. 1). If the suitable cell is not found, then the processing unit 160 may use the stored information cell selection procedure so as to find the suitable cell to perform camping on.

In other words, before attempting to originate the emergency call, the UE 100 is in the state camped normally. If the UE 100 causes the lower layer failed due to originating the emergency call (e.g., RACH failure) and triggers the performing any cell selection procedure (e.g., State 111 in FIG. 1), then after the emergency call is ended, the UE 100 might not return to the state camped on any cell (e.g., State 113 in FIG. 1). In order to return to state camped normally within a short time, the UE 100 may perform the cell reselection evaluation procedure in the first PLMN (e.g., State 107 in FIG. 1).

Accordingly, in the embodiment, in the condition that the signal strength and signal quality of the transmitted serving cell in the (automatically or manually) selected PLMN is poor and the attempt of the emergency call is failed, an acceptable cell in any other PLMNs is searched, so as to elevate a probability of successfully connecting an emergency call. In addition, after the acceptable cell is camped on, an emergency call is automatically originated in the present embodiment, so as to eliminate the tedious manual process.

For the sake of easily understanding said steps mentioned in above embodiments, another embodiment illustrating the operating procedures applied in the disclosure is described below.

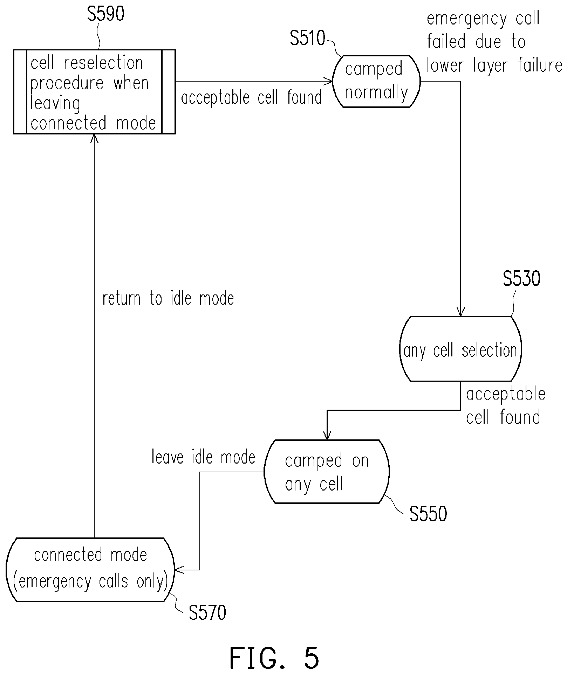

FIG. 5 shows an embodiment that the UE 100 establishes an emergency call. Referring to FIG. 5, it is assumed that the UE 100 has camped on the suitable cell of selected PLMN and is in the state camped normally, and has received the dial operation through the input unit of the UE 100 to originate an emergency call (the step S510). If the UE 100 receives the lower layer failure indication, then enters the state any cell selection and start finding an acceptable cell of any one of the PLMNs (the step S530). If the UE 100 has found the acceptable cell, then enters the state camped on any cell, and camps on the acceptable cell being found (the step S550). Next, the UE 100 originates the emergency call again. If the connection is successfully established, then the UE 100 leaves the idle mode and enters the connected mode (the step S570). After the UE 100 has interrupted the emergency call, it may leave the connected mode and returns to be in the PLMN which is selected in the step S510 to perform cell reselection (the step S590). Next, if a suitable cell is found, the UE 100 returns to the step S510, and camps on the suitable cell.

In light of the foregoing, the control method of emergency call and user equipment using the same of the disclosure can, under the condition that the emergency call has failed due to the lower layer failure, find an acceptable cell in any one of other PLMNs, and originate the emergency call again after camping on the acceptable cell. Accordingly, in the embodiment of the disclosure, the problem that the UE remains on the worse serving cell and to attempt an emergency call continues to be failed can be avoided, further a probability of successfully establishing an emergency call would be significantly elevated.

## Claims

1. A control method of an emergency call, adapted to a user equipment, UE (100), the control method comprising:
originating an emergency call in a first public land mobile network, PLMN;
determining whether a failure indication related to a radio resource is received; and
selecting one of second PLMNs supported by the UE (100) in response to the failure indication being received, and originating the emergency call again, **characterized in that** the UE disables a cell reselection procedure in the first PLMN and finds an acceptable cell of any one of the second PLMNs.

2. The control method as claimed in claim 1, wherein a step of, selecting one of second PLMNs supported by the UE (100) in response to the failure indication being received, and originating the emergency call again comprises:
performing a camping procedure to the acceptable cell; and
originating the emergency call again on the acceptable cell that has completed the camping procedure.

3. The control method as claimed in claim 2, further comprising:
in response to the failure indication being received, if the acceptable cell is not found, originating the emergency call is not attempted.

4. The control method as claimed in claim 3, further comprising:
finding a suitable cell, so as to perform the camping procedure; and
performing a stored information cell selection procedure in response to the suitable cell not being found so as to find the suitable cell.

5. The control method as claimed in claim 1, further comprising:
performing a cell reselection procedure in the first PLMN in response to the emergency call being ended; and
disabling finding the acceptable cell of any one of the second PLMNs.

6. The control method as claimed in claim 1, wherein the failure indication is a lower layer failure indication of a call control layer.

7. A user equipment (100), comprising:
a transceiver module (130), transmitting and receiving wireless signals;
a storage unit (150), recording a plurality of modules; and
a processing unit (160), coupling the transceiver module (130) and the storage unit (150), and accessing and executing the plurality of modules recorded by the storage unit (150), wherein the plurality of modules comprise:
a radio resource control (RRC) module (151); and
a call control (CC) module (155), originating an emergency call in a first public land mobile network, PLMN, determining whether a failure indication from the RRC module (151) is received, selecting one of second PLMNs supported by the UE (100) in response to the failure indication being received, and originating the emergency call again, **characterized in that** the RRC module (151) disables a cell reselection procedure in the first PLMN and initiates finding an acceptable cell of any one of the second PLMNs.

8. The user equipment (100) as claimed in claim 7, wherein the RRC module (151) performs a camping procedure to the acceptable cell, and the CC module (155) originates the emergency call again on the acceptable cell that has completed the camping procedure.

9. The user equipment (100) as claimed in claim 8, wherein in response to the failure indication being received, if the acceptable cell is not found, the CC module (155) does not attempt to originate the emergency call.

10. The user equipment (100) as claimed in claim 9, wherein the RRC module (151) initiates finding a suitable cell, so as to perform the camping procedure, and performing a stored information cell selection procedure in response to the suitable cell not being found so as to find the suitable cell.

11. The user equipment (100) as claimed in claim 7, wherein the RRC module (151) initiates performing a cell reselection procedure in the first PLMN in response to the emergency call being ended; and disabling finding the acceptable cell of any one of the second PLMNs.

12. The user equipment (100) as claimed in claim 7, wherein the failure indication is a lower layer failure indication of a CC layer.

## Patentansprüche

1. An ein Endgerät (100) angepasstes Notruf-Steuerverfahren, wobei das Steuerverfahren umfasst:
einen Notruf in einem ersten öffentlichen Fest- und Mobilfunknetz auslösen;
feststellen, ob eine Störungsanzeige bezüglich einer Funkressource empfangen wird; und
als Reaktion auf den Empfang einer Störungsanzeige ein von einem Endgerät (100) unterstütztes zweites öffentliches Fest- und Mobilfunknetz auswählen; und den Notruf erneut auslösen, **dadurch gekennzeichnet, dass** das Endgerät ein Zellneuwahlverfahren im ersten öffentlichen Fest- und Mobilfunknetz deaktiviert und eine geeignete Zelle in einem der zweiten öffentlichen Fest- und Mobilfunknetze findet.

2. Steuerverfahren gemäß Anspruch 1,
wobei der Schritt, als Reaktion auf den Empfang einer Störungsanzeige ein von einem Endgerät (100) unterstütztes zweites öffentliches Fest- und Mobilfunknetz auszuwählen und den Notruf erneut auszulösen umfasst:
mit der geeigneten Zelle ein Campingverfahren durchführen;
den Notruf mit der geeigneten Zelle, die das Campingverfahren abgeschlossen hat, erneut auslösen.

3. Steuerverfahren gemäß Anspruch 2, ferner umfassend:
als Reaktion auf den Empfang einer Störungsanzeige wird der Notruf nicht ausgelöst, wenn keine geeignete Zelle gefunden wurde.

4. Steuerverfahren gemäß Anspruch 3, ferner umfassend:
eine geeignete Zelle finden, um das Campingverfahren durchzuführen; und
als Reaktion darauf, dass keine geeignete Zelle gefunden wurde, ein gespeichertes Informationszellenauswahlverfahren durchführen, um eine geeignete Zelle zu finden.

5. Steuerverfahren gemäß Anspruch 1, ferner umfassend:
als Reaktion darauf, dass der Notruf beendet ist, das Zellneuwahlverfahren im ersten öffentlichen Fest- und Mobilfunknetz durchführen; und
das Finden einer geeigneten Zelle in einem zweiten öffentlichen Fest- und Mobilfunknetz deaktivieren.

6. Steuerverfahren gemäß Anspruch 1,
wobei die Störungsanzeige die Störungsanzeige einer unteren Schicht einer Verbindungssteuerungsschicht ist.

7. Endgerät (100), umfassend:
einen Sende-Empfangs-Einschub (130), der Funksignale sendet und empfängt;
eine Speichereinheit (150), die eine Vielzahl von Modulen aufzeichnet; und
eine Verarbeitungseinheit (160), die den Sende-Empfangs-Einschub (130) und die Speichereinheit (150) miteinander verbindet und auf die Vielzahl von in der Speichereinheit (150) aufgezeichneten Modulen zugreift und diese ausführt,
wobei die Vielzahl von Modulen umfasst:
ein Funkressourcensteuerungsmodul (151); und
ein Verbindungssteuerungsmodul (155),
einen Notruf in einem ersten öffentlichen Fest- und Mobilfunknetz auslösen, feststellen, ob eine Störungsanzeige von einem Funkressourcensteuerungsmodul (151) empfangen wird,
als Reaktion auf den Empfang einer Störungsanzeige ein von einem Endgerät (100) unterstütztes zweites öffentliches Fest Mobilfunknetz auswählen und den Notruf erneut auslösen, **dadurch gekennzeichnet, dass** das Funkressourcensteuerungsmodul (151) ein Zellneuwahlverfahren im ersten öffentlichen Fest- und Mobilfunknetz deaktiviert und das Finden einer geeigneten Zelle in einem der zweiten öffentlichen Fest- und Mobilfunknetze anzeigt.

8. Endgerät (100) gemäß Anspruch 7,
wobei das Funkressourcensteuerungsmodul (151) das Campingverfahren mit der geeigneten Zelle durchführt und das Verbindungssteuerungsmodul (155) den Notruf an die geeignete Zelle, die das Campingverfahren abgeschlossen hat, erneut auslöst.

9. Endgerät (100) gemäß Anspruch 8,
wobei das Verbindungssteuerungsmodul (155) nicht versucht, als Reaktion auf den Empfang einer Störungsanzeige einen Notruf auszulösen, wenn keine geeignete Zelle gefunden wurde.

10. Endgerät (100) gemäß Anspruch 9,
wobei das Funkressourcensteuerungsmodul (151) zur Durchführung des Campingverfahrens das Finden einer geeigneten Zelle initiiert und als Reaktion darauf, dass keine geeignete Zelle gefunden wurde, ein gespeichertes Informationszellenauswahlverfahren durchführt, um eine geeignete Zelle zu finden.

11. Endgerät (100) gemäß Anspruch 7,
wobei das Funkressourcensteuerungsmodul (151) als Reaktion darauf, dass der Notruf beendet ist, die Durchführung des Zellneuwahlverfahrens im ersten öffentlichen Fest- und Mobilfunknetz initiiert; und
das Finden einer geeigneten Zelle in einem zweiten öffentlichen Fest- und Mobilfunknetz deaktiviert.

12. Endgerät (100) gemäß Anspruch 7,
wobei die Störungsanzeige die Störungsanzeige einer unteren Schicht einer Verbindungssteuerungsschicht ist.

## Revendications

1. Un procédé de commande d'un appel d'urgence, adapté à un équipement d'utilisateur, UE (100), le procédé de commande comprenant :
l'émission d'un appel d'urgence dans un premier réseau mobile terrestre public PLMN ;
la détermination de si une indication de défaillance liée à une ressource radio est reçue ;
et la sélection d'un parmi les seconds PLMN pris en charge par l'UE (100) en réponse à l'indication de défaillance qui est reçue,
et l'émission à nouveau de l'appel d'urgence, **caractérisé en ce que** l'UE désactive une procédure de resélection de la cellule dans le premier PLMN et trouve une cellule acceptable de l'un quelconque parmi le second PLMN.

2. Le procédé de commande comme revendiqué dans la revendication 1,
dans lequel une étape de sélection d'un parmi les seconds PLMN pris en charge par l'UE (100) en réponse à l'indication de défaillance qui est reçue et d'émission à nouveau de l'appel d'urgence comprend :
la réalisation d'une procédure de mise en attente pour la cellule acceptable ;
et l'émission à nouveau de l'appel d'urgence sur la cellule acceptable qui a terminé la procédure de mise en attente.

3. Le procédé de commande comme revendiqué dans la revendication 2 comprenant en outre :
en réponse à l'indication de défaillance qui est reçue, si la cellule acceptable n'est pas trouvée, l'émission de l'appel d'urgence n'est pas tentée.

4. Le procédé de commande comme revendiqué dans la revendication 3 comprenant en outre :
la recherche d'une cellule convenable, de façon à réaliser la procédure de mise en attente ;
et la réalisation d'une procédure de sélection de la cellule d'informations mémorisées en réponse à la cellule convenable qui n'est pas trouvée de façon à trouver la cellule convenable.

5. Le procédé de commande comme revendiqué dans la revendication 1 comprenant en outre :
la réalisation d'une procédure de resélection de la cellule dans le premier PLMN en réponse à un appel d'urgence qui est terminé ;
et la désactivation de la recherche de la cellule acceptable de l'un quelconque parmi les seconds PLMN.

6. Le procédé de commande comme revendiqué dans la revendication 1,
dans lequel l'indication de défaillance est une indication de défaillance de la couche inférieure d'une couche de commande d'appel.

7. Un équipement d'utilisateur (100) comprenant :
un module d'émetteur-récepteur (130), transmettant et recevant des signaux sans fil ;
une unité de stockage (150), enregistrant une pluralité de modules ;
et une unité de traitement (160), couplant le module d'émetteur-récepteur (130) et l'unité de stockage (150), et l'accédant et l'exécutant la pluralité de modules enregistrés par l'unité de stockage (150),
dans lequel la pluralité de modules comprend :
un module de commande de ressources radio (RRC) (151) ;
et un module de commande d'appel (CC) (155),
l'émission d'un appel d'urgence dans un premier réseau mobile terrestre public PLMN,
la détermination de si une indication de défaillance liée à une ressource radio (151) est reçue,
la sélection d'un parmi les seconds PLMN pris en charge par l'UE (100) en réponse à l'indication de défaillance qui est reçue,
et l'émission à nouveau de l'appel d'urgence, **caractérisé en ce que** le module de RRC (151) désactive une procédure de resélection de la cellule dans le premier PLMN et lance la recherche d'une cellule acceptable de l'un quelconque parmi les seconds PLMN.

8. L'équipement d'utilisateur (100) comme revendiqué dans la revendication 7, dans lequel le module de RRC (151) réalise une procédure de mise en attente pour la cellule acceptable, et le module de CC (155) émet l'appel d'urgence à nouveau sur la cellule acceptable qui a terminé la procédure de mise en attente.

9. L'équipement d'utilisateur (100) comme revendiqué dans la revendication 8, dans lequel en réponse à l'indication de défaillance qui est reçue, si la cellule acceptable n'est pas trouvée, le module de CC (155) ne cherche pas à émettre l'appel d'urgence.

10. L'équipement d'utilisateur (100) comme revendiqué dans la revendication 9, dans lequel le module de RRC (151) lance la recherche d'une cellule convenable, de façon à réaliser la procédure de mise en attente et la réalisation d'une procédure de sélection de la cellule d'informations mémorisées en réponse à la cellule convenable qui n'est pas trouvée afin de rechercher la cellule convenable.

11. L'équipement d'utilisateur (100) comme revendiqué dans la revendication 7, dans lequel le module de RRC (151) lance la réalisation d'une procédure de resélection de la cellule dans le premier PLMN en réponse à un appel d'urgence qui est terminé ;
et la désactivation de la recherche de la cellule acceptable de l'un quelconque parmi les seconds PLMN.

12. L'équipement d'utilisateur (100) comme revendiqué dans la revendication 7, dans lequel l'indication de défaillance est une indication de défaillance de la couche inférieure d'une couche de CC.
